# EUROPÄISCHE PATENTSCHRIFT

(11) **EP 0 814 000 B1**
(45) Veröffentlichungstag und Bekanntmachung des Hinweises auf die Patenterteilung: **28.08.2002**
(21) Anmeldenummer: 97109221.8
(22) Anmeldetag: 06.06.1997
(51) Int. Cl.: B60R 21/28, B60R 21/26

(54) **Aufblasbares Fahrzeuginsassen-Rückhaltesystem**
Inflatable passenger restraint system
Système gonflable de retenue des occupants de véhicule

(30) Priorität: 17.06.1996 DE 19624044
(43) Veröffentlichungstag der Anmeldung: 29.12.1997
(73) Patentinhaber: Bayerische Motoren Werke Aktiengesellschaft, 80788 München (DE)
(72) Erfinder: Pantke, Siegfried, 86971 Peiting (DE)

(56) Entgegenhaltungen:
- DE-A- 4 041 049
- US-A- 3 684 309
- US-A- 3 861 712
- US-A- 3 884 499
- US-A- 5 197 759
- US-A- 5 366 242
- US-A- 5 489 117

## Beschreibung

Die Erfindung betrifft ein aufblasbares Fahrzeuginsassen-Rückhaltesystem gemäß dem Oberbegriff der Ansprüche 1 und 2.

Solche aufblasbaren Fahrzeuginsassen-Rückhaltesysteme (auch Airbag genannt) werden dazu verwendet, bei starken Verzögerungen einen Aufprall der Fahrzeuginsassen auf Inneneinrichtungen eines Fahrzeugs zu vermeiden und dadurch Verletzungen vorzubeugen. Solche Rückhaltesysteme sind allgemein bekannt und werden in vielen Fahrzeugen verwendet.

Herkömmlicherweise wird bei Überschreiten einer bestimmten Verzögerungsgrenze ein Gasgenerator aktiviert, welcher innerhalb kürzester Zeit einen aufblasbaren Gassack mit Gas befüllt, der zwischen einem Fahrzeuginsassen und einer Inneneinrichtung eines Fahrzeugs plaziert wird. Bewegt sich der Fahrzeuginsasse dann entgegen der Verzögerungsrichtung (z. B. nach vorne oder zur Seite), so trifft er auf den Gassack auf und wird von diesem zurückgehalten. Bei einem seitlichen Auftreffen eines Drittfahrzeuges treten nicht nur Verzögerungen, sondern auch Beschleunigungen auf. Im übrigen kann eine Verformung von Fahrzeugteilen stattfinden, die in den Innenraum des Fahrzeugs verschoben werden. Auch vor einer Kollision mit solchen verschobenen Teilen schützt das Rückhaltesystem.

Die DE 44 39 123 beschäftigt sich mit der Thematik, den Druck innerhalb eines Gassacks beim Aufblasen nicht über einen vorbestimmten Wert anwachsen zu lassen, da ansonsten beim Aufprall auf den Gassack infolge dessen "Härte" für den Fahrzeuginsassen Verletzungsrisiken bestehen.

Allerdings wird dabei außer acht gelassen, daß sich der Gasdruck gerade durch den Aufprall des Fahrzeuginsassen auf den Gassack auf Werte erhöhen kann, die schließlich zu Verletzungen führen können. Dabei muß man zwischen Airbag bzw. Airbagbereichen unterscheiden, die verschiedenen Körperpartien eines Fahrzeuginsassen zugeordnet sind. Beispielsweise ist beim einem Frontairbag das Verletzungsrisiko ab einem bestimmten Grenzdruckwert im Kopfbereich höher als im Kniebereich. Bei Verwendung eines Seitenairbags muß unterschieden werden, ob dieser im Bereich des Kopfes, der Schulter, des Thorax oder des Beckens angeordnet ist. Je nachdem können nur unterschiedliche Belastungswerte für verschiedene Körperteile gestattet werden.

Um den Druck in einem Gassack nicht über einen bestimmten Grenzwert anwachsen zu lassen, wurde in der US 3,451,693 eine Druckbegrenzungseinrichtung vorgeschlagen, bei der der Gassack an einer bestimmten Stelle aufreißt, wenn dessen Innendruck einen bestimmten Grenzwert überschreitet. Allerdings kann es dabei zu einem zu großen Gasverlust innerhalb des Airbag kommen, so daß der Fahrzeuginsasse schlußendlich doch auf die Inneneinrichtung des Fahrzeugs aufschlagen kann.

Weiterhin ist aus der gattungsbildenden US 5,197,759 eine Gaskissen-Aufprallschutzvorrichtung bekannt. Diese bekannte Gaskissen-Aufprallschutzvorrichtung (Airbag) für Insassen eines Kraftfahrzeuges besitzt ein durch eine Druckgasquelle aufblasbares Gaskissen. Um ein weiches Eintauchen des Körpers in das Gaskissen zu ermöglichen, ist zwischen dem Gaskissen-Innenraum und der Umgebung ein Ablassventil angeordnet, das bei Überschreitung einer vorgegebenen Druckdifferenz zwischen Gaskissen-Innenraum und Umgebung öffnet.

Zum weiteren technischen Umfeld wird auch auf die US-A-3,861,712 und die US-A-3,684,309 verwiesen.

Aufgabe der vorliegenden Erfindung ist es, ein eingangs genanntes aufblasbares Fahrzeuginsassen-Rückhaltesystem derart weiterzuentwickeln, daß bei optimaler Rückhaltewirkung Verletzungen sicher vermieden werden können.

Diese Aufgabe wird durch die in den Ansprüchen 1, und 2 angegebenen Merkmale gelöst.

Demgemäß aktiviert die Steuervorrichtung die Ventilationsvorrichtung eine vorgegebene Zeitspanne, nachdem der Gasgenerator aktiviert worden ist. Ferner muß die Ventilationsvorrichtung derart ausgebildet sein, daß der Druck innerhalb des Gassacks zumindest über eine vorgegebene Zeitspanne nicht über einen vorbestimmten Grenzdruck ansteigt. Das erste Merkmal gewährleistet, daß der Gassack in kürzest möglicher Zeit auf seinen Grenz- oder Solldruck aufgeblasen wird, so daß das dem entsprechenden Gassack zugeordnete Körperteil in maximaler Weise zurückgehalten werden kann. Dabei ist zu beachten, daß je nach Körperpartie unterschiedliche Grenzdrücke vorgegeben werden müssen. Bei Verwendung von mehreren Gassäcken, die verschiedenen Partien zugeordnet werden, können die Grenzdrücke auf die entsprechenden Körperpartien - z. B. Kopf, Schulter, Thorax, Becken etc. - abgestimmt werden.

Ist der Grenzdruck dann erreicht, darf der Gasinnendruck diese Schwelle nicht überschreiten. Eine Drucküberschreitung könnte beispielsweise im Thoraxbereich zum Bruch von Rippen führen. Aus diesem Grund wird die Ventilationsvorrichtung aktiv, die den Innendruck im Gassack begrenzt und nicht über den vorbestimmten Grenzdruck anwachsen läßt.

Die Ventilationsvorrichtung kann sehr verschieden ausgebildet sein. Sie ist bei ihrem Betrieb mit einem entsprechend zugeordneten Gassack verbunden, so daß dessen Innendruck die Ventilationsvorrichtung beaufschlagt und Gas abgelassen werden kann, wenn der Innendruck des Gassacks den vorbestimmten Grenzwert überschreitet. Optimalerweise wird der Druck innerhalb des Gassacks im Bereich des Grenzdrucks gehalten. Insbesondere wird die Energie des Gases im jeweiligen Gassack zur Steuerung der Ventilation verwendet.

Die Ausführungsform der Ventilationsvorrichtung nach Anspruch 1 ist durch eine Kolben-Feder-Anordnung gekennzeichnet, wobei der Kolben bei entsprechender Beaufschlagung mit Druck zumindest eine Entlüftungsöffnung freigibt und die den Kolben vorspannende Feder den Grenzdruck definiert. Diese Ausführungsform der Ventilationsvorrichtung ist sehr einfach, kostengünstig und funktionssicher.

Eine ebenfalls kostengünstige, einfache und funktionssichere Ausführungsform der Ventilationsvorrichtung nach Anspruch 2 ist, durch eine Deckel-Feder-Anordnung gebildet, wobei der Deckel bei entsprechender Beaufschlagung mit Druck- und zwar dem Innendruck des Gassacks - zumindest eine Entlüftungsöffnung freigibt und die den Deckel vorspannende Feder den Grenzdruck definiert.

Über den Verschiebungs- bzw. den Öffnungsgrad des Kolbens oder der Feder kann ferner auf den Innendruck im Gassack geschlossen werden. Damit ist mit Hilfe einer Erfassungsvorrichtung, welche diesen Verschiebungs- bzw. Öffnungsgrad ermittelt, auf kostengünstige Weise die sonst so aufwendige Bestimmung des Gassackinnendruckes möglich.

Es kann je nach Unfallart, Gassackinnendruck oder aufgrund anderer Umstände notwendig sein, den Gassackinnendruck mehr oder weniger schnell zu senken. Dazu ist es vorteilhaft, wenn die Größe mindestens einer Entlüftungsöffnung veränderbar ist. Eine solche Veränderung kann über einen Stellmotor bewirkt werden, welcher beispielsweise auf Signale anspricht, die einer bestimmten Unfallart, dem Gasinnendruck in einem Gassack oder sonstigen Bedingungen entsprechen.

Die Aktivierung der Ventilationsvorrichung kommt gemäß einer bevorzugten Ausführungsform dadurch zustande, daß eine Strömungsverbindung zwischen dem Innnenraum des Gassacks und der Ventilationsvorrichtung hergestellt wird.

Eine solche Strömungsverbindung kann dadurch zur Verfügung gestellt werden, daß eine Verschiebeplatte vorgesehen wird, welche eine Durchtrittsöffnung umfaßt, die wiederum beim Aktivieren der Ventilationsvorrichtung mit einem zum Gassack führenden Durchlaß in Strömungsverbindung gebracht wird.

Die Verbindungseinrichtung oder die Verschiebeplatte sollte vor Aktivierung der Ventilationsvorrichtung in ihrer Anfangsposition arretiert sein, so daß eine Strömungsverbindung nicht bereits beim Aufbau des Drucks im Gassack existiert. Dadurch würde der Druck im Gassack möglicherweise zu langsam aufgebaut werden.

Wie vorgenannt bereits erwähnt, können für verschiedene Körperpartien verschiedene Gassäcke vorgesehen werden, die jeweils mit separaten Ventilationsvorrichtungen verbunden werden können. Dies hat den Vorteil, daß jedem Gassack ein individueller Druck zuordenbar ist, so daß auf die entsprechenden Belastungsgrenzen der unterschiedlichen Körperpartien eines Fahrzeuginsassen Rücksicht genommen werden kann.

Gemäß einer vorteilhaften Ausführungsform der Erfindung ist die Ventilationsvorrichtung mit einer Aufblasvorrichtung gekoppelt. Zuerst wird die Aufblasvorrichtung - welche zwischen Gasgenerator und Gassack geschaltet ist - zur Befüllung des bzw. der verschiedenen Gassäcke aktiv. Dabei ist sie beispielsweise dafür verantwortlich, daß in den verschiedenen Gassäcken nur die den entsprechenden Körperpartien zugeordneten Drücke vorhanden sind. Ist der oder sind die Gassäcke dann mit den entsprechenden Gasinnendrücken aufgeblasen, so wird die Aufblasvorrichtung im wesentlichen deaktiviert oder in ihr Aufblasverhalten derart eingegriffen, daß sich die Drücke nicht wesentlich über ihren Grenzwert erhöhen. Gleichzeitig wird die Ventilationsvorrichtung aktiviert, so daß die Gasinnendrücke in den entsprechenden Gassäcken nicht durch Umgebungseinflüsse ihre vordefinierten Grenzwerte übersteigen.

Die Koppelung kann vorzugsweise dadurch vorgesehen werden, daß eine gemeinsame Schieberplatte für die Ventilationsvorrichtung und die Aufblasvorrichtung verwendet wird, die einerseits als Ventilglied zur Steuerung des Aufblasvorganges beim Gassack dient und andererseits zur Verbindung zwischen Gassack und Ventilationsvorrichtung verwendet wird.

Je nach Verzögerungs- bzw. Unfallsituation kann es notwendig sein, die verschiedenen im Fahrzeug vorhandenen Gassäcke auf unterschiedliche Weise und mit unterschiedlichen Drücken aufzublasen. Dazu werden die Beschleunigungssignale ausgewertet, welche von verschiedenen im Fahrzeug angeordneten Sensoren erhalten werden. Aufgrund dieser Signale kann die Steuereinrichtung die Aufblasvorrichtung bzw. die Ventilationsvorrichtung in geeigneter Weise beaufschlagen.

Eine weitere vorteilhafte Ausführungsform ist dadurch gekennzeichnet, daß die Ventilationsvorrichtung im aktiven Zustand, auch bei einem unterhalb des Grenzdrucks vorliegenden Innendruck, eine zumindest geringfügige Entlüftung des Gassacks gestattet. Dies trägt dazu bei, daß nach einem Unfall der Gassack wieder in sich zusammen sinken kann, so daß der Fahrer notwendige Bewegungsfreiheiten zurück erhält.

Die Erfindung wird nachfolgend - auch hinsichtlich weiterer Vorteile und Merkmale - anhand den beiliegenden Zeichnungen beschrieben, in denen in
- Fig. 1: eine stark schematisierte Darstellung einer ersten Ausführungsform einer Aufblas- und Ventilationssteuerung gemäß der vorliegenden Erfindung dargestellt ist,
- Fig. 2: eine schematische Darstellung einer zweiten Ausführungsform einer Aufblas- und Ventilationssteuerung dargestellt ist,
- Fig. 3: eine schematische Detailansicht einer Deckel-Feder-Anordnung für eine Ventilationsvorrichtung dargestellt ist und
- Fig. 4: eine graphische Darstellung bzgl. eines gewünschten Druck-Zeitverhaltens darstellt.

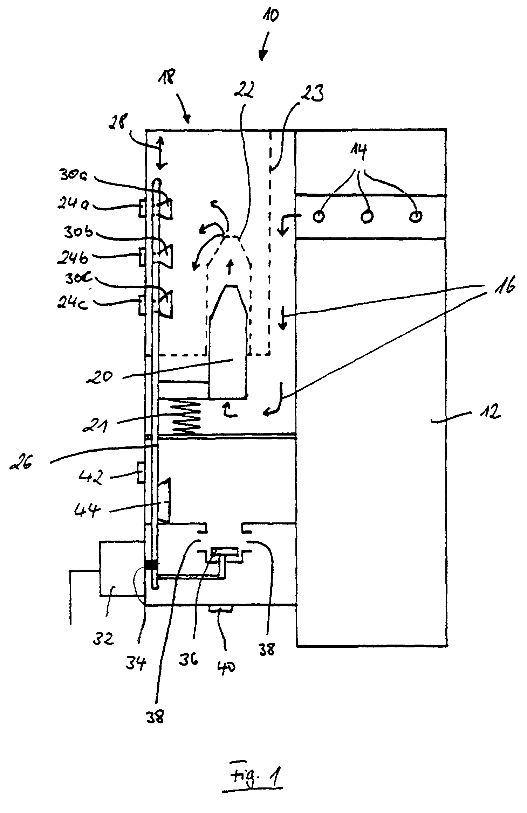

In Fig. 1 ist eine kombinierte Aufblas- und Ventilationssteuerung 10 dargestellt, deren Funktionsweise und Vorrichtungsmerkmale nachfolgend erläutert werden.

Ein Gasgenerator 12 wird von einer nicht dargestellten Steuerungseinrichtung aktiviert. Dabei wird ein Gas erzeugt, welches über Ausströmöffnungen 14 in einen Diffusor 18 gelangen. In diesem sind Strömungskanäle angeordnat; beispielsweise ist durch eine Gasführungswand 23 ein solcher Strömungskanal gebildet, in dem das Gas in der mit Pfeilen 16 bezeichneten Richtung strömt.

In dem Diffusor 18 ist eine in ihrer Längsrichtung bewegbare Verschiebeplatte 26 angeordnet, die zunächst mittels eines Sprengbolzens 34 in einem Anfangszustand arretiert ist. Die Verschiebeplatte 26 weist drei Durchlässe mit Gasanpresstrichter 30a, 30b und 30c auf. Die Durchlässe 30a bis 30c sind in ihrer Anfangsposition mit Austrittsöffnungen 24a, 24b und 24c entsprechend ausgerichtet, welche im Gehäuse des Diffusors 18 angeordnet sind und eine Strömungsverbindung zwischen dem Innenraum des Diffusors 18 und verschiedenen Gassäcken (nicht dargestellt) herstellen.

Beispielsweise wird im Ausführungsbeispiel über die Austrittsöffnung 24a ein Gassack für den Kopfbereich, über die Austrittsöffnung 24b ein Gassack für den Schulterbereich und über den Auslaß 24c ein Gassack für den Thoraxbereich mit Gas versorgt.

Die für jeden Gassack erforderlichen Druckwerte, mit denen die entsprechenden Körperpartien belastet werden können, ergeben sich durch eine verschieden große Öffnung der Austrittsöffnungen 24a bis 24c sowie der Durchlässe 30a bis 30c und der Befüllzeit. Bei großer Durchströmöffnung wird bei einer bestimmten Befüllzeit ein großer Druck erzeugt. Hingegen wirkt eine kleine Austrittsöffnung in Verbindung mit einem entsprechend kleinen Durchlaß wie eine Drosselung, so daß nur ein entsprechend kleinerer Druck in dem zugeordneten Gassack erreicht wird. Das Gas aus dem Gasgenerator 12 strömt über einen Diffusorkegel 20, der mittels eines Armes an der Verschiebeplatte 26 befestigt ist. Der Diffusorkegel 20 besitzt ein spitzes Ende mit einer kleinen Öffnung, so daß ein bestimmter Staudruck entsteht, wodurch der Diffusorkegel 20 und mit diesem auch die Verschiebeplatte 26 in Strömungsrichtung des Gases beaufschlagt werden.

Der Diffusorkegel 20 ist in einem Anschlagkegel 22 gelagert, der in Fig. 1 gestrichelt dargestellt ist. Die Funktion des Anschlagkegels 22 wird später noch deutlich.

Insgesamt strömt das vom Gasgenerator 12 erzeugte Gas durch den Diffusorkegel 20 und den Anschlagkegel 22 in Richtung der Durchlässe 30a bis 30c und durch die Austrittsöffnungen 24a bis 24c in die entsprechenden (nicht dargestellten) Gassäcke. Ab einer vorbestimmten Zeit, auf die später noch eingegangen wird, wird der Sprengbolzen 34 mittels einer Zündvorrichtung zerstört, wodurch die Arretierung der Verschiebeplatte 26 aufgehoben wird. Durch den im Diffusorkegel existierenden Staudruck sowie der Vorspannung einer zwischen dem Diffusorkegel (bzw. dessen Verbindungsarm zur Schiebeplatte) und einem diffusorfesten Abstützteil angeordneten Feder 21 wird der Diffusorkegel 20 soweit in Strömungsrichtung des Gases verschoben, bis er an den Anschlagkegel 22 zu liegen kommt.

Dadurch verschieben sich entsprechend die Durchlässe 30a bis 30c gegenüber den Austrittsöffnungen 24a bis 24c, so daß sie nunmehr entsprechend der konstruktiven Anordnung nicht mehr mit den Austrittsöffnungen 24a bis 24c ausgerichtet sind. Je nach Größe und Verschiebung bzw. Anordnung der Durchlässe 30a bis 30c und der Austrittsöffnungen 24a bis 24c, kann der jeweilige Strömungsquerschnitt noch in bestimmtem Maße aufrechterhalten werden. In der Fig. 1 werden die Strömungsverbindungen zu den entsprechenden Gassäcken vollständig abgebrochen.

Gleichzeitig kommen durch die Verschiebung der Verschiebeplatte 26 in Fig.1 nach oben eine im Gehäuse des Diffusors 18 angeordnete Gaseintrittsöffnung 42 mit einer Ventilationsöffnung 44, die in der Verschiebeplatte 26 angeordnet ist, in ausgerichteter Weise zu liegen. Die Gaseintrittsöffnung 42 ist im vorliegenden Fall mit einem Gassack, also beispielsweise dem Kopf-, dem Schulter- oder dem Thoraxgassack verbunden. Wie später noch dargestellt wird, können allerdings auch mehr Ventilationsvorrichtungen vorgesehen werden.

Im Ausführungsbeispiel der Fig. 1 ist ein an der Verschiebplatte 26 angeordneter Kolben 36 bei der Verschiebung der Verschiebeplatte 26 in Gasströmungsrichtung des Diffusorkegels 20 nach oben bewegt worden. Dadurch wird ein möglicher Strömungsweg über Gasaustrittsöffnungen 38 sowie eine Öffnung nach außen 40 vollständig verschlossen. Wird allerdings der Innendruck in dem mit der Gaseintrittsöffnung 42 verbundenen Gassack zu groß, so wirkt sich der über die Gaseintrittsöffnung 42 und die Ventilationsöffnung 44 auf den Kolben 36 ausgeübte Druck so aus, daß dieser entgegen der Kraft der Feder 21 nach unten bewegt wird und den Strömungsweg über die Gasaustrittsöffnungen 38 und die Öffnung nach außen 40 freigibt. Damit kann Gas bei zu hohem Innendruck aus dem entsprechenden Gassack an die Außenumgebung freigegeben werden.

Der Grenzdruck ist definiert durch die Stärke der Feder 21, die den Kolben vorspannt.

Mit der vorgenannten Vorrichtung regelt sich damit der Innendruck im mit der Gaseintrittsöffnung 42 und der Ventilationsvorrichtung verbundenen Gassack auf einen durch die Stärke der Feder 21 vordefinierten Grenzwert ein.

Um eine zumindest geringfügige Entlüftung des Gassacks auch dann zuzulassen, wenn der Gasinnendruck unter dem von der Feder 21 vorgegebenen Grenzwert liegt, kann zwischen dem Kolben 36 und den Gasaustrittsöffnungen in jedem Zustand des Kolben 36 eine kleine Strömungsöffnung verbleiben, so daß eine vollständige Entlüftung des entsprechenden Gassacks möglich ist.

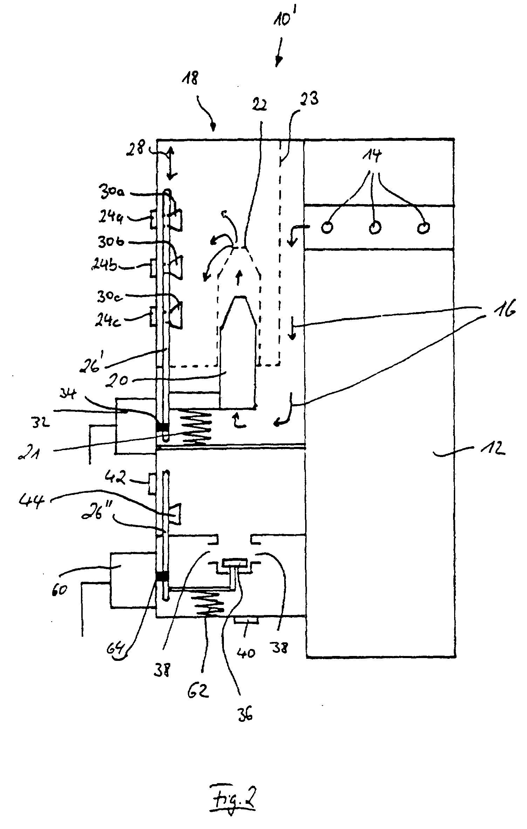

In Fig. 2 ist eine weitere Ausführungsform einer Aufblas- und Ventilationssteuerung 10' dargestellt, wobei hierbei die Aufblas- und Ventilationsvorrichtung getrennt sind. Die mit Fig. 1 übereinstimmenden Bezugsziffern bezeichnen einander entsprechende Teile.

Im wesentlichen ist die Verschiebeplatte nunmehr in zwei Teile, nämlich 26' und 26" aufgeteilt, so daß eine Koppelung zwischen Aufblas- und Ventilationsvorrichtung entfällt.

Für die Verschiebeplatte 26", die nunmehr alleinig der Ventilationsvorrichtung zugeordnet ist, wird eine eigene Zündvorrichtung 60, und ein die Verschiebplatte 26' in ihrer Anfangsposition arretierender Sprengbolzen 64 vorgesehen. Ferner ist der Kolben 36 nunmehr mit einer eigenen Feder 62 vorgespannt, die den Kolben 36 gegen ein Gehäuseteil des Diffusors 18 abstützt.

Die Funktionsweise der Ausführungsvariante gemäß Fig. 2 entspricht derjenigen von Fig. 1, mit dem Unterschied, daß die Aufblasvorrichtung und die Ventilationsvorrichtung getrennt angesteuert werden können.

Vorteilhaft bei dieser Ausführungsform ist, daß für verschiedene Gassäcke eigene Ventilationsvorrichtungen vorgesehen sein können, die je nach Steuerungs- oder Druckwunsch entsprechend schnell oder langsam angesteuert bzw. ausgelegt werden können.

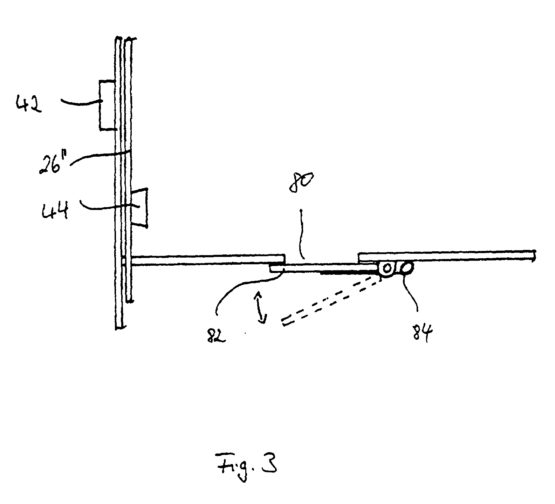

Eine weitere Möglichkeit, den Gasinnendruck in den entsprechenden Gassäcken zu regeln, ist aus Fig. 3 zu erkennen. Diese Abbildung ist eine vergrößerte Detailabbildung in stark schematisierter Weise, die ebenfalls die Gaseintrittsöffnung 42, die Verschiebplatte 26" sowie die Ventilationsöffnung 44 in der Verschiebeplatte 26" darstellt. In einer diffusortesten Platte ist eine Öffnung 80 angeordnet, die mittels eines Deckels 82 abgedeckt werden kann. Der Deckel 82 ist mittels einer Feder gegen diese Öffnung vorgespannt, so daß bei kleinem Druck die Öffnung 80 verschlossen ist. Erhöht sich der Druck über einen vorbestimmten Grenzwert, so öffnet sich der Deckel 82 entsprechend weit und gibt eine Strömungsverbindung zwischen dem zugeordneten Gassack und beispielsweise der Außenumgebung frei. Auf diese Art und Weise kann ebenfalls einfach und kostengünstig der Innendruck im zugeordneten Gassack gesteuert werden.

Im Deckel 82 können zur vollständigen Entlüftung ein oder mehrere Löcher angeordnet sein.

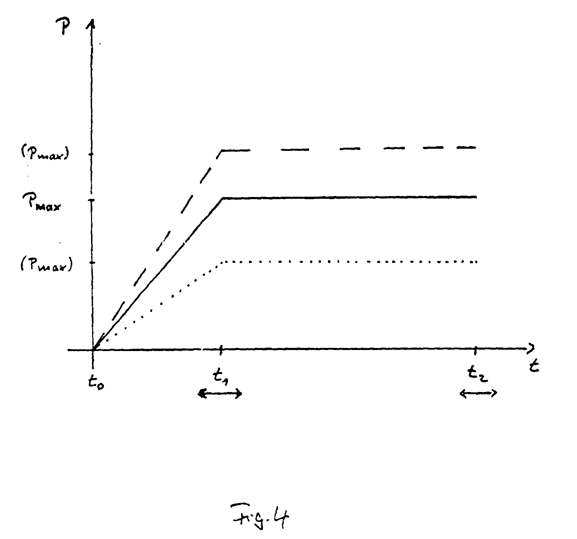

Das wesentliche an allen Ausführungsvarianten bzw. allen noch denkbaren Ausführungsvarianten geht aus der graphischen Darstellung in Fig. 4 hervor. Diese Figur beschreibt den angestrebten Gasinnendruck in einem Gassack (und gestrichelt sowie punktiert in zwei weiteren Gassäcken) in einem Druck-Zeit-Diagramm (P-t-Diagramm).

Zum Zeitpunkt t₀ wird von der Steuerungsvorrichtung der Gasgenerator 12 aktiviert, der Gas erzeugt, welches in einen oder mehrere Gassäcke weitergeleitet wird. Zwischen dem Zeitpunkt t₀ und t₁ baut sich der Druck in einem Gassack - gemäß Fig. 4 linear - auf und erreicht zum Zeitpunkt t₁ seinen Maximalwert Pₘₐₓ. Zum Zeitpunkt t₁ wird die Ventilationsvorrichtung aktiviert, die sicherstellt, daß zwischen dem Zeitpunkt t₁ und t₂ der Gasinnendruck im zugeordneten Gassack im wesentlichen konstant bleibt.

Je nach Strömungsquerschnittsöffnung in der Aufblasvorrichtung werden die entsprechend zugeordneten Gassäcke mehr oder weniger schnell befüllt, was sich in höheren oder niedrigeren maximalen Drücken (Pₘₐₓ) ausdrückt. Dies ist durch die gestrichelte und punktierten Graphen in Fig. 4 dargestellt.

Mit der vorliegenden Erfindung wird in einfacher und kostensparender Weise ein größtmöglicher Schutz der Fahrzeuginsassen gewährleistet. Der Innendruck eines Gassacks wird möglichst schnell auf einen Grenzwert gebracht, welcher für die zugeordnete Körperpartie zulässig ist. Ferner wird der Gasinnendruck dann auf diesem Grenzwert gehalten, so daß eine optimale Rückhaltefunktion gewährleistet wird, ohne die Gefahr für Verletzungen in den entsprechenden Körperbereichen zu erhöhen.

Insgesamt wird mit der Erfindung somit auch der Effekt berücksichtigt, der auftritt, wenn sich - gerade im Seitenbereich - das Fahrzeug (beispielsweise die Fahrzeugtür) verformt und dadurch der Druck in dem entsprechenden Gassack sprunghaft auf einen weit über einen tolerablen Grenzwert liegenden Wert erhöht werden würde.

## Patentansprüche

1. Aufblasbares Fahrzeuginsassen-Rückhaltesystem umfassend
einen aufblasbaren Gassack,
einen Gasgenerator (12) zum Aufblasen des Gassacks,
eine Ventilationsvorrichtung, die den Gassack mittelbar oder unmittelbar mit der Außenumgebung zur Änderung des Druckes im Gassack verbindet und
eine Steuervorrichtung zur Aktivierung des Gasgenerators (12) und der Ventilationsvorrichtung,
wobei
die Steuervorrichtung eine vorgegebene Zeit nach Aktivieren des Gasgenerators (12) und Aufblasen des Gassacks die Ventilationsvorrichtung aktiviert und
die Ventilationsvorrichtung derart ausgebildet ist, um den Druck innerhalb des Gassacks zumindest über eine vorgegebene Zeitperiode nicht über einen vorbestimmten Grenzdrucks ansteigen zu lassen,
**dadurch gekennzeichnet,**
**daß** die Ventilationsvorrichtung eine Kolben-Feder-Anordnung (21, 36, 62) umfaßt, wobei der Kolben (36) bei entsprechender Beaufschlagung mit Druck zumindest eine Entlüftungsöffnung (38, 40) freigibt und die den Kolben (36) vorspannende Feder (21, 62) den Grenzdruck definiert, wobei
eine Erfassungsvorrichtung vorgesehen ist, die das Maß der Kolben bewegung unmittelbar oder mittelbar detektiert, um über die so ermittelte Größe auf den Innendruck im zugeordneten Gassack schließen zu können.

2. Aufblasbares Fahrzeuginsassen-Rückhaltesystem umfassend
einen aufblasbaren Gassack,
einen Gasgenerator (12) zum Aufblasen des Gassacks,
eine Ventilationsvorrichtung, die den Gassack mittelbar oder unmittelbar mit der Außenumgebung zur Änderung des Druckes im Gassack verbindet und
eine Steuervorrichtung zur Aktivierung des Gasgenerators (12) und der Ventilationsvorrichtung,
wobei
die Steuervorrichtung eine vorgegebene Zeit nach Aktivieren des Gasgenerators (12) und Aufblasen des Gassacks die Ventilationsvorrichtung aktiviert und
die Ventilationsvorrichtung derart ausgebildet ist, um den Druck innerhalb des Gassacks zumindest über eine vorgegebene Zeitperiode nicht über einen vorbestimmten Grenzdrucks ansteigen zu lassen,
**dadurch gekennzeichnet,**
**daß** die Ventilationsvorrichtung eine Deckel-Feder-Anordnung (80, 82, 84) umfaßt, wobei der Deckel (82) bei entsprechender Beaufschlagung mit Druck zumindest eine Entlüftungsöffnung (80) freigibt und die den Deckel (82) vorspannende Feder (84) den Grenzdruck definiert, wobei eine Erfassungsvorrichtung vorgesehen ist, die das Maß der Deckelbewegung unmittelbar oder mittelbar detektiert, um über die so ermittelte Größe auf den Innendruck im zugeordneten Gassack schließen zu können.

3. Aufblasbares Fahrzeuginsassen-Rückhaltesystem nach Anspruch 1 oder 2,
**dadurch gekennzeichnet,**
**daß** die Größe zumindest einer der Entlüftungsöffnungen (38, 40, 80) veränderbar ist, insbesondere in Abhängigkeit von Signalen, die einer Unfallart oder dem Innendruck des zugeordneten Gassacks entsprechen.

4. Aufblasbares Fahrzeuginsassen-Rückhaltesystem nach einem der vorhergehenden Ansprüche,
**dadurch gekennzeichnet,**
**daß** die Ventilationsvorrichtung eine Strömungsverbindungseinrichtung (42, 44) umfaßt, die bei Aktivierung der Ventilationsvorrichtung eine Strömungsverbindung zum Gassack herstellt.

5. Aufblasbares Fahrzeuginsassen-Rückhaltesystem nach Anspruch 4,
**dadurch gekennzeichnet,**
**daß** die Strömungsverbindungseinrichtung (42, 44) eine Verschiebeplatte (26, 26") mit einer Durchtrittsöffnung (44) umfaßt, die beim Aktivieren der Ventilationsvorrichtung mit einem zum Gassack führenden Durchlaß (42) in Strömungsverbindung gebracht wird.

6. Aufblasbares Fahrzeuginsassen-Rückhaltesystem nach Anspruch 4 oder 5,
**dadurch gekennzeichnet,**
**daß** die Verbindungseinrichtung oder die Verschiebeplatte (26, 26") durch ein Halteorgan, insbesondere einen Sprengbolzen (34), in einer Anfangsposition arretiert ist und die Arretierung bei Aktivierung der Ventilationsvorrichtung durch Sprengung mittels einer Sprengvorrichtung (32) lösbar ist.

7. Aufblasbares Fahrzeuginsassen-Rückhaltesystem nach einem der vorhergehenden Ansprüche,
**dadurch gekennzeichnet,**
**daß** der Gassack mehrere, insbesondere voneinander getrennte Kammern aufweist, von denen zumindest eine mit einer zugeordneten Ventilationsvorrichtung verbunden ist.

8. Aufblasbares Fahrzeuginsassen-Rückhaltesystem nach einem der vorhergehenden Ansprüche,
**dadurch gekennzeichnet,**
**daß** die Ventilationsvorrichtung mit einer Aufblasvorrichtung (20, 22, 24a - 24c, 30a - 30c) gekoppelt ist, derart daß bei Aktivierung der Ventilationsvorrichtung die Aufblasvorrichtung im wesentlichen deaktiviert oder in ihr Aufblasverhalten eingegriffen wird.

9. Aufblasbares Fahrzeuginsassen-Rückhaltesystem nach Anspruch 8,
**dadurch gekennzeichnet,**
**daß** die Ventilationsvorrichtung und die Aufblasvorrichtung eine gemeinsame Schieberplatte (26) besitzen, die einerseits als Ventilglied zur Steuerung des Aufblasvorganges beim Gassack dient und andererseits zur Verbindung zwischen Gassack und der Ventilationsvorrichtung verwendet wird.

10. Aufblasbares Fahrzeuginsassen-Rückhaltesystem nach einem der vorhergehenden Ansprüche,
**dadurch gekennzeichnet,**
**daß** die Steuereinrichtung die vorgegebene Zeit zur Aktivierung der Ventilationsvorrichtung aus Beschleunigungssignalen errechnet.

11. Aufblasbares Fahrzeuginsassen-Rückhaltesystem nach einem der vorhergehenden Ansprüche,
**dadurch gekennzeichnet,**
**daß** die Ventilationsvorrichtung im aktiven Zustand auch bei einem unterhalb des Grenzdrucks vorliegenden Innendruck eine zumindest geringfügige Entlüftung des Gassacks gestattet.

## Claims

1. An inflatable passenger restraint system comprising
an inflatable gasbag,
a gas generator (12) for inflating the gasbag,
a ventilation device which directly or indirectly connects the gasbag to the external environment in order to alter the pressure in the gasbag and
a control device for activating the gas generator (12) and the ventilation device, in which
the control device activates the ventilation device a preset time after the gas generator (12) has been activated and the gasbag has been inflated and
the ventilation device is constructed so that the pressure inside the gasbag is not allowed to rise above a set limiting pressure, at least for a preset time,
**characterised in that**
the ventilation device comprises a piston-spring arrangement (21, 36, 62) wherein the piston (36), when suitably pressurised, releases at least one vent opening (38, 40) and the spring (21, 62) prestressing the piston (36) defines the limiting pressure, in which
a detection device is provided and directly or indirectly detects the extent of movement of the piston in order, via the thus-determined quantity, to obtain information about the pressure in the associated gasbag.

2. An inflatable passenger restraint system comprising
an inflatable gasbag,
a gas generator (12) for inflating the gasbag,
a ventilation device which directly or indirectly connects the gasbag to the external environment in order to alter the pressure in the gasbag and
a control device for activating the gas generator (12) and the ventilation device, in which
the control device activates the ventilation device a preset time after the gas generator (12) has been activated and the gasbag has been inflated and
the ventilation device is constructed so that the pressure inside the gasbag is not allowed to rise above a set limiting pressure, at least for a preset time,
**characterised in that** the ventilation device comprises a cover-spring arrangement (80, 82, 84) wherein the cover (82), when suitably pressurised, uncovers at least one vent opening (80) and the spring (84) prestressing the cover (82) defines the limiting pressure, in which
a detection device is provided and directly or indirectly detects the extent of movement of the piston in order, via the thus-determined quantity, to obtain information about the pressure in the associated gasbag.

3. An inflatable passenger restraint system according to claim 1 or 2, **characterised in that** the size of at least one of the vent openings (38, 40, 80) is variable, particularly in dependence on signals corresponding to the nature of an accident or the pressure inside the associated gasbag.

4. An inflatable passenger restraint system according to any of the preceding claims, **characterised in that** the ventilation device comprises a flow-connection device (42, 44) which provides a flow connection to the gasbag when the ventilation device is activated.

5. An inflatable passenger restraint system according to claim 4, **characterised in that** the flow connection device (42, 44) comprises a sliding plate (26, 26") formed with a passage opening (44) which, when the ventilation device is activated, is brought into flow connection with a passage (42) leading to the gasbag.

6. An inflatable passenger restraint system according to claim 4 or 5, **characterised in that** the connecting device or the sliding plate (26, 26") is locked by a retaining means, particularly an explosive bolt (34), in a starting position and when the ventilation device is activated the lock is releasable by exploding at least one explosive device (32).

7. An inflatable passenger restraint system according to any of the preceding claims, **characterised in that** the gasbag has a number of chambers, more particularly separate from one another, at least one being connected to an associated ventilation device.

8. An inflatable passenger restraint system according to any of the preceding claims, **characterised in that** the ventilation device is coupled to an inflation device (20, 22, 24a - 24c, 30a - 30c) such that when the ventilation device is activated, the inflation device is substantially inactivated or its inflation properties are altered.

9. An inflatable passenger restraint system according to claim 8, **characterised in that** the ventilation device and the inflation device have a common slide plate (26) which on the one hand serves as a valve member for controlling the process of inflating the gasbag and on the other hand is used as a connection between the gasbag and the ventilation device.

10. An inflatable passenger restraint system according to any of the preceding claims, **characterised in that** the control device uses acceleration signals to calculate the preset time for activating the ventilation device.

11. An inflatable passenger restraint system according to any of the preceding claims, **characterised in that** in the active state, the ventilation device ensures that the gasbag is vented at least slightly even when the internal pressure is below the limiting pressure.

## Revendications

1. Système de retenue gonflable des occupants d'un véhicule comprenant une poche de gaz gonflable, un générateur de gaz (12) pour gonfler la poche de gaz, un dispositif de ventilation reliant la poche de gaz directement ou indirectement avec l'environnement extérieur pour modifier la pression dans la poche de gaz et un dispositif de commande pour activer le générateur de gaz (12) et le dispositif de ventilation,
le dispositif de commande activant le dispositif de ventilation un temps prédéterminé après avoir activé le générateur de gaz (12) et gonflé la poche de gaz,
le dispositif de ventilation étant réalisé pour que la pression dans la poche de gaz ne dépasse pas, au moins pendant une période de temps prédéterminée, une pression limite prédéfinie,
**caractérisé en ce que**
le dispositif de ventilation comporte un dispositif à piston et ressort (21, 36, 62) et pour une sollicitation correspondante par la pression, le piston (36) libère au moins un orifice de ventilation (38, 40) et le ressort (21, 62) qui précontraint le piston (36) définit la pression limite,
dans lequel on prévoit un dispositif de saisie qui détecte le degré de mouvement du piston directement ou indirectement pour ainsi déterminer l'amplitude de la pression intérieure dans la poche de gaz.

2. Système de retenue gonflable des passagers d'un véhicule comprenant une poche de gaz gonflable, un générateur de gaz (12), pour gonfler la poche, un dispositif de ventilation qui relie la poche de gaz directement ou indirectement à l'environnement pour modifier la pression dans la poche de gaz et un dispositif de commande pour activer le générateur de gaz (12) et le dispositif de ventilation,
dans lequel le dispositif de commande active le dispositif de ventilation, un temps prédéterminé après l'activation du générateur de gaz (12) et le gonflement de la poche de gaz, et
le dispositif de ventilation est réalisé pour que la pression dans la poche de gaz n'augmente au-delà d'une pression limite prédéterminée au moins pendant une période de temps prédéterminée,
**caractérisé en ce que**
le dispositif de ventilation comporte un ensemble couvercle-ressort (80, 82, 84) le couvercle (82) libérant, lorsqu'il est sollicité par une pression prédéterminée, au moins un orifice de ventilation (80) et le ressort (84) assurant la précontrainte du couvercle (82) définit la pression limite, en prévoyant un dispositif de saisie qui détecte le degré de mouvement du couvercle directement ou indirectement pour conclure par l'amplitude ainsi obtenue, sur la pression intérieure de la poche de gaz associée.

3. Système de retenue gonflable pour les occupants d'un véhicule selon les revendications 1 ou 2,
**caractérisé en ce que**
la taille d'au moins l'un des orifices de ventilation (38, 40, 80) est variable notamment en fonction de signaux qui correspondent à un accident ou à la pression interne de la poche de gaz associée.

4. Système de retenue gonflable pour les occupants d'un véhicule selon l'une des revendications précédentes,
**caractérisé en ce que**
le dispositif de ventilation comporte une installation de communication (42, 44) qui, lorsqu'elle est activée par le dispositif de ventilation, établit une liaison de passage avec la poche de gaz.

5. Système de retenue gonflable pour les occupants d'un véhicule selon la revendication 4,
**caractérisé en ce que**
l'installation de liaison (42, 44) comporte une plaque coulissante (26, 26") avec un orifice de passage (44) qui, lorsque le dispositif de ventilation est activé, vient en communication avec un passage (42) allant à la poche de gaz.

6. Système de retenue gonflable pour les occupants d'un véhicule selon la revendication 4 ou 5,
**caractérisé en ce que**
l'installation de liaison ou la plaque coulissante (26, 26") est bloquée par un organe de retenue, notamment un goujon (34) susceptible d'être rompu, dans sa position initiale et le blocage est libéré lors de l'activation du dispositif de ventilation par l'explosion, à l'aide d'un dispositif explosif (32).

7. Système de retenue gonflable pour les occupants d'un véhicule selon l'une des revendications précédentes,
**caractérisé en ce que**
la poche de gaz comporte plusieurs chambres séparées les unes des autres et dont au moins l'une est reliée à un dispositif de ventilation associé.

8. Système de retenue gonflable pour les occupants d'un véhicule selon l'une des revendications précédentes,
**caractérisé en ce que**
le dispositif de ventilation est couplé à un dispositif de gonflement (20, 22, 24a-24c, 30a-30c) de façon qu'en activant le dispositif de ventilation, on désactive principalement le dispositif de gonflement ou on intervient dans son comportement de gonflement.

9. Système de retenue gonflable pour les occupants d'un véhicule selon la revendication 8,
**caractérisé en ce que**
le dispositif de ventilation et le dispositif de gonflement ont une plaque coulissante (26) commune qui, d'une part, sert à commander l'opération de gonflement de la poche gonflable et, d'autre part, assure la liaison entre la poche gonflable et le dispositif de ventilation.

10. Système de retenue gonflable pour les occupants d'un véhicule selon l'une des revendications précédentes,
**caractérisé en ce que**
l'installation de commande calcule le temps prédéterminé pour activer le dispositif de ventilation à partir des signaux d'accélération.

11. Système de retenue gonflable pour les occupants d'un véhicule selon l'une des revendications précédentes,
**caractérisé en ce que**
le dispositif de ventilation permet à l'état activé, également lorsque la pression est en-dessous de la pression limite, une légère évacuation du gaz de la poche de gaz.
